# EUROPÄISCHE PATENTSCHRIFT

(11) **EP 3 201 981 B1**
(45) Veröffentlichungstag und Bekanntmachung des Hinweises auf die Patenterteilung: **08.08.2018**
(21) Anmeldenummer: 16762817.1
(22) Anmeldetag: 08.09.2016
(51) Int. Cl.: H01M 10/052, C07F 9/6584, C07F 7/08, H01G 11/62, H01G 11/64, H01M 10/0567, H01M 10/0568, H01M 10/0569

(54) **CYCLISCHE PHOSPHONAMIDE ALS ELEKTROLYTBESTANDTEIL FÜR LITHIUM-IONEN-BATTERIEN**
CYCLIC PHOSPHONAMIDES AS AN ELECTROLYTE COMPONENT FOR LITHIUM-ION BATTERIES
PHOSPHONAMIDES CYCLIQUES UTILISÉS COMME CONSTITUANT D'ÉLECTROLYTE POUR BATTERIES LITHIUM-ION

(30) Priorität: 28.09.2015 DE 102015218653
(43) Veröffentlichungstag der Anmeldung: 09.08.2017
(73) Patentinhaber: Wacker Chemie AG, 81737 München (DE)
(72) Erfinder: BRÄUNLING, Daniel, 80807 München (DE); DEUBEL, Frank, 80939 München (DE)
(74) Vertreter: Fritz, Helmut
(86) Internationale Anmeldenummer: PCT/EP2016/071165
(87) Internationale Veröffentlichungsnummer: WO 2017/055049

(56) Entgegenhaltungen:
- DE-A1-102013 224 159
- US-A1- 2015 140 445

## Beschreibung

Die Erfindung betrifft einen Elektrolyten, der aprotisches Lösungsmittel, lithiumhaltiges Leitsalz, Vinylencarbonat und cyclisches Phosphonamid umfasst, sowie eine Lithium-Ionen-Batterie.

Lithium-Ionen-Batterien gehören zu den aussichtsreichsten Systemen für mobile Anwendungen. Die Einsatzgebiete reichen dabei von hochwertigen Elektronikgeräten bis hin zu Batterien für Kraftfahrzeuge mit Elektroantrieb.

Elektrolytstammlösungen für Lithium-Ionen-Batterien auf Basis cyclischer/aliphatischer Carbonate sind vielfach beschrieben und bilden als Hauptkomponenten die Basis der meisten Elektrolytgrundzusammensetzungen. Vinylencarbonat (VC), welches als Filmbildungsadditive den Aufbau der "solid elektrolyte interphase" (SEI) unterstützen soll, wird typischerweise meist in Mengen 2-10 Gew.-% zugegeben. In US7476469 sind auch Stammlösungen mit einem höheren VC-Anteil für ein Anodenmaterial bestehend aus dünnen amorphen/mikrokristallinen Silicium-Schichten beschrieben.
In WO15078789 werden silylierte, cyclische Phosphonamide und deren Einsatz als Additiv für Elektrolytmischungen in Lithium-Ionenbatterien beschrieben.

Aufgrund einer starken Volumenausdehnung von Si-haltigen Anodenmaterialien während der Zyklisierung ist die Zyklenstabilität von Li-Ionen-Batterien mit Si-haltigen Anodenmaterialien noch unzureichend. Die in den ersten Zyklen durch elektrochemische Zersetzung einzelner Elektrolytbestandteile gebildete SEI-Schicht hält den starken mechanischen Belastungen nicht stand. Eine fortwährende Nachbildung der SEI-Schicht führt zur Verarmung/zum Verbrauch einzelner Elektrolytbestandteile und damit zu einer kontinuierlichen Abnahme der Kapazität der Zelle mit steigender Zyklenzahl.

Gegenstand der Erfindung ist ein Elektrolyt, der 100 Gewichtsteile aprotisches Lösungsmittel, 1 bis 50 Gewichtsteile lithiumhaltiges Leitsalz, 4 bis 50 Gewichtsteile Vinylencarbonat und cyclisches Phosphonamid der allgemeinen Formel 1 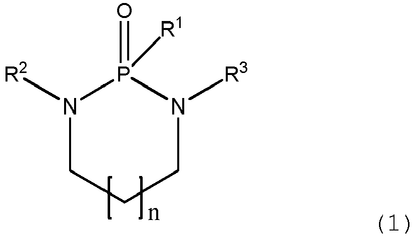 enthält, in der
- R¹, R², R³: jeweils einen unsubstituierten oder mit Fluor, Chlor oder Silylgruppen substituierten Kohlenwasserstoffrest mit 1-20 Kohlenstoffatomen bedeuten, wobei zwei oder drei der Reste R¹, R², R³ miteinander verbunden sein können und
- n: die Werte 0, 1, 2, 3, 4 oder 5 bedeutet.
Überraschend wurde gefunden, dass der Kapazitätserhalt von Lithium-Ionen-Batterien während der Zyklisierung durch den Einsatz von Phosphonamid der allgemeinen Formel 1 als Additiv in VC-reichen Elektrolytstammlösungen signifikant verbessert werden kann. Der kontinuierliche Kapazitätserhalt ist sogar besser als bei der gewählten Referenzelektrolytmischung ausgehend von literaturbekannten Elektrolytzusammensetzungen für Si-haltige Anoden [Kawashima, A. et al., Journal of The Electrochemical Society 2011, 158, A798-A801; Aurbach, D. et al., Langmuir 2012, 28, 965-976]. Die Referenzelektrolytmischung besteht aus Ethylmethylcarbonat(EMC) und Fluorethylencarbonat (FEC) mit einem geringen Anteil an VC.

Beispiele für Reste R¹, R², R³ sind Alkylreste, wie der Methyl-, Ethyl-, n-Propyl-, iso-Propyl-, 1-n-Butyl-, 2-n-Butyl-, isoButyl-, tert.-Butyl-, n-Pentyl-, iso-Pentyl-, neo-Pentyl-, tert.-Pentylrest; Hexylreste, wie der n-Hexylrest; Heptylreste, wie der n-Heptylrest; Octylreste, wie der n-Octylrest, iso-Octylreste wie der 2,2,4-Trimethylpentylrest; Nonylreste, wie der n-Nonylrest; Decylreste, wie der n-Decylrest; Dodecylreste, wie der n-Dodecylrest; Octadecylreste, wie der n-Octadecylrest; Cycloalkylreste, wie der Cyclopentyl-, Cyclohexyl-, Cycloheptylrest und Methylcyclohexylreste; Alkenylreste, wie der Vinyl-, 1-Propenyl- und der 2-Propenylrest; Arylreste, wie der Phenyl-, Naphthyl-, Anthryl- und Phenanthrylrest; Alkarylreste, wie o-, m-, p-Tolylreste; Xylylreste und Ethylphenylreste; und Aralkylreste, wie der Benzylrest, der α- und der β-Phenylethylrest.

Beispiele für substituierte Reste R¹, R², R³ sind der Trifluormethyl, der 3,3,3-Trifluor-n-propylrest, der 2,2,2,2',2',2'-Hexafluorisopropylrest, der 5,5,5,4,4,3,3-Heptafluorpentylrest und Heptafluorisopropylrest, und Halogenarylreste, wie der o-, m- und p-Chlorphenylrest und Trimethylsilylalkylreste mit 1-6 Kohlenstoffatomen im Alkylrest, insbesondere der Trimethylsilylmethylrest.

Bevorzugte Kohlenwasserstoffreste R¹ weisen 1-10 Kohlenstoffatome auf. Besonders bevorzugt sind Alkylreste mit 1 bis 6 Kohlenstoffatomen und Alkenylreste mit 2 bis 6 Kohlenstoffatomen. Insbesondere bevorzugt für R¹, R², R³ ist jeweils der Methyl-, Ethyl-, n-Propyl-, iso-Propyl- und Vinylrest.

Wenn zwei oder drei der Reste R¹, R², R³ miteinander verbunden sind, können diese einen mono- oder bicyclischen Kohlenwasserstoffring bilden.

Vorzugsweise hat n die Werte 0 oder 1.

Besonders bevorzugt ist *N,N*'-Bis(trimethylsilylmethyl)-*N*,*N'-*trimethylenmethylphosphonsäurediamid.

Die Herstellung der cyclischen Phosphonamide der allgemeinen Formel 1 ist bekannt aus WO15078789.

Vorzugsweise enthält der Elektrolyt 0,1 bis 10 Gewichtsteile, besonders bevorzugt 0,5 bis 5 Gewichtsteile, insbesondere 1 bis 3 Gewichtsteile cyclisches Phosphonamid der allgemeinen Formel 1.

Das aprotische Lösungsmittel wird vorzugsweise ausgewählt aus organischen Carbonaten, wie Dimethylcarbonat, Diethylcarbonat, Ethylmethylcarbonat, Ethylencarbonat, Vinylencarbonat, Propylencarbonat, Butylencarbonat; cyclischen und linearen Estern, wie Methylacetat, Ethylacetat Butylacetat, Propylpropionat, Ethylbutyrat, Ethyl-isobutyrat; cyclischen und linearen Ethern, wie 2-Methyltetrahydrofuran, 1,2-Diethoxymethan, THF, Dioxan, 1,3-Dioxolan, Diisopropylether, Diethylenglycoldimethylether; Ketonen, wie Cyclopentanon, Diisopropylketon, Methyl-isobutylketon; Lactonen, wie γ-Butyrolacton; Sulfolane, Dimethylsulfoxid, Formamid, Dimethylformamid, 3-Methyl-1,3-oxazolidine-2-on und Gemischen dieser Lösungsmittel. Besonders bevorzugt sind die vorstehend beschriebenen organischen Carbonate.
Der Elektrolyt enthält vorzugsweise 5 bis 40 Gewichtsteile, insbesondere 10 bis 20 Gewichtsteile lithiumhaltiges Leitsalz.
Das lithiumhaltige Leitsalz wird vorzugsweise ausgewählt aus LiPF₆, LiBF₄, LiClO₄, LiAsF₆, (LiB(C₂O₄)₂, LiBF₂(C₂O₄)), LiSO₃CₓF₂ₓ₊₁, LiN(SO₂CₓF₂ₓ₊₁)₂ und LiC(SO₂CₓF₂ₓ₊₁)₃, wobei x ganzzahlige Werte von 0 bis 8 einnimmt, und deren Mischungen. Die Elektrolyte können, wie beispielsweise in DE10027626A beschrieben, auch weitere Additive, wie organische Isocyanate zur Herabsetzung des Wassergehaltes, HF-Abfänger, Lösungsvermittler für LiF, organische Lithiumsalze und/oder Komplexsalze enthalten.
Ebenfalls Gegenstand der Erfindung ist eine Lithium-Ionen-Batterie, welche Kathode, Anode, Separator und den vorstehend beschriebenen Elektrolyten umfasst.
Die negative Elektrode der Lithium-Ionen-Batterie (Anode) umfasst vorzugsweise ein Material, das reversibel Lithiumionen aufnehmen und wieder abgeben kann, wie beispielsweise metallisches Lithium, Kohlenstoff, wie Ruß oder Graphit, Silicium, Zinn, Aluminium oder Blei, bevorzugt Graphit und/oder Silicium. Die positive Elektrode der Lithium-Ionen-Batterie (Kathode) umfasst vorzugsweise ein Lithium-Übergangmetall-Oxid oder ein Lithium-Übergangsmetall-Phosphat. Bevorzugte Übergangmetalle sind Ti, V, Cr, Mn, Co, Fe, Ni, Mo, W. Bevorzugte Lithium-Übergangmetall-Oxide sind LiCoO₂, LiNiO₂, LiMnO₂, LiMn₂O₄, Li(CoNi)O₂, Li(CoV)O₂, Li(CoFe)O₂. Bevorzugte Lithium-Übergangsmetall-Phosphate sind LiCoPO₄, Li(NiMn)PO₄ und LiNiPO₄. Die Elektroden der Lithium-Ionen-Batterie können weitere Additive enthalten, die z.B. die Leitfähigkeit erhöhen, Bindemittel, Dispergiermittel und Füllstoffe. Es können die weiteren Additive eingesetzt werden, welche in EP785586A beschrieben sind.

Ebenfalls Gegenstand der Erfindung ist die Verwendung des vorstehend beschriebenen Elektrolyten in einer Lithium-Ionen-Batterie.

Alle vorstehenden Symbole der vorstehenden Formeln weisen ihre Bedeutungen jeweils unabhängig voneinander auf. In allen Formeln ist das Siliciumatom vierwertig.

In den folgenden Beispielen sind, falls jeweils nicht anders angegeben, alle Mengen- und Prozentangaben auf das Gewicht bezogen, alle Drücke 0,10 MPa (abs.) und alle Temperaturen 20°C.

### Beispiele:

### 1. Referenzelektrolytmischung mit Ethylmethylcarbonat(EMC) und Fluorethylencarbonat (FEC) (nicht erfindungsgemäss)

Es wurde ausgehend von literaturbekannten Elektrolytzusammensetzungen [Kawashima, A. et al., Journal of The Electrochemical Society 2011, 158, A798-A801; Aurbach, D. et al., Langmuir 2012, 28, 965-976]analog eine Mischung hergestellt aus FEC/EMC im Volumenverhältnis 30:70. Darin wurden 2 Gew.-% Vinylencarbonat und 1 M LiPF6 gelöst.

### 2. Elektrolytmischung mit N,N'-Bis(trimethylsilylmethyl)-N,N'-trimethylenmethylphosphonsäurediamid (cyPPA)

Es wurde eine Mischung hergestellt aus Vinylencarbonat/Ethylmethylcarbonat im Volumenverhältnis 12:88. Darin wurden 2 Gew.-% cyPPA und 1 M LiPF₆ gelöst.

**Verwendete Elektroden und Zellbau:** Mit den Elektrolytmischungen aus den Beispielen 1 und 2 wurden Vollzellen (Typ CR2032) mit Si/Graphit Anode und NMC (Nickel-Mangan-Kobalt) gebaut. Die Elektrolytmenge lag konstant bei 80 µl. Als Separator wurden GF Type D Glass Microfibre Filters (Whatman) verwendet. Die eingesetzte Anode bestand zu 20 % aus Silicium (nicht aggregierte Partikel mit einer mittleren Partikelgröße von ∼ 180 nm), 60 % Graphit (SFG 6), 8 % Binder (CMC 1380) und 12 % Leitruß (Super P). Bei der verwendeten Kathode handelte es sich um ein Standardmaterial bestehend aus 94 % NMC111, 2 % Binder und 4 % Leitmaterial. Das eingesetzte Kapazitätsverhältnis von Kathode zu Anode betrug 2,0/2,1 mAh/cm². An den gebauten Zellen wurden jeweils Entladekapazitäten im ersten Zyklus Z1 sowie der Kapazitätsrückhalt nach 100 (Rückhalt Z100) und 300 Zyklen (Rückhalt Z300) bestimmt. Die Ergebnisse sind in Tabelle 1 aufgeführt.

**Geräte und Messmethoden:** Die elektrochemische Testung erfolgte an einem Prüfstand BaSyTeC CTS-Lab Battery Test System in Vollzellen - Knopfzellen. Die Zellen wurden zunächst im Spannungsfenster von 4,2 -3,0 V zwei Zyklen mit C/10 und einem sich jeweils anschließenden CV-Schritt formiert (4,2 V bis 3 V, C/10, cccv (cv-Schritt bis I< 0,01 CA)). Im Anschluss wurde im gleichen Spannungsfenster, 300 Zyklen mit C/2 und einem sich jeweils anschließenden CV-Schritt zyklisiert (4,2 V bis 3 V, C/2, cccv (cv-Schritt bis I< 0,125 CA)).

**Tabelle 1:**

| **Elektrolytmischung** | **Entladekapazität Z1 [mAh/cm²]** | **Rückhalt Z100 [%]** | **Rückhalt Z300 [%]** |
|---|---|---|---|
| 1 nicht erfindungsgemäss | 1,80 | 63,1 | 46,4 |
| 2 mit cyPPA | 1,74 | 80,5 | 68,0 |

Der Effekt des cyclischen Phosphonamids der allgemeinen Formel 1 ist sichtbar am Kapazitätsrückhalt in Tabelle 1: Es werden ca. 17 % Verbesserung nach 100 Zyklen und ca. 22 % Verbesserung nach 300 Zyklen gegenüber der Referenzelektrolytmischung (siehe Beispiel 1) erreicht.

Der gleiche Ausgangszustand (Beladung, Balancing) der Elektroden in den Zellen enthaltend Elektrolytmischungen 1 und 2 wird belegt durch annährend gleiche Entladekapazität der Zellen im ersten Zyklus Z1.

## Patentansprüche

1. Elektrolyt, der
100 Gewichtsteile aprotisches Lösungsmittel, 1 bis 50 Gewichtsteile lithiumhaltiges Leitsalz, 4 bis 50 Gewichtsteile Vinylencarbonat und cyclisches Phosphonamid der allgemeinen Formel 1 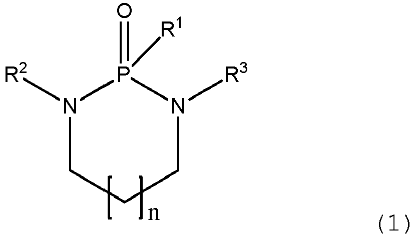 enthält, in der
R¹, R², R³ jeweils einen unsubstituierten oder mit Fluor, Chlor oder Silylgruppen substituierten Kohlenwasserstoffrest mit 1-20 Kohlenstoffatomen bedeuten, wobei zwei oder drei der Reste R¹, R², R³ miteinander verbunden sein können und
n die Werte 0, 1, 2, 3, 4 oder 5 bedeutet.

2. Elektrolyt nach Anspruch 1, bei dem R² und R³ ausgewählt werden aus Trimethylsilylalkylresten mit 1-6 Kohlenstoffatomen im Alkylrest.

3. Elektrolyt nach einem oder mehreren der vorangehenden Ansprüche, bei dem R¹ ein Alkylrest mit 1 bis 6 Kohlenstoffatomen ist.

4. Elektrolyt nach einem oder mehreren der vorangehenden Ansprüche, bei dem n den Wert 1 hat.

5. Elektrolyt nach einem oder mehreren der vorangehenden Ansprüche, bei dem der Elektrolyt 0,1 bis 10 Gewichtsteile cyclisches Phosphonamid der allgemeinen Formel 1 enthält.

6. Elektrolyt nach einem oder mehreren der vorangehenden Ansprüche, bei dem das aprotische Lösungsmittel ausgewählt wird aus organischen Carbonaten, cyclischen und linearen Estern, cyclischen und linearen Ethern, Ketonen, Lactonen, Sulfolanen, Dimethylsulfoxid, Formamid, Dimethylformamid, 3-Methyl-1,3-oxazolidine-2-on und Gemischen dieser Lösungsmittel.

7. Elektrolyt nach einem oder mehreren der vorangehenden Ansprüche, bei dem das lithiumhaltige Leitsalz ausgewählt wird aus LiPF₆, LiBF₄, LiClO₄, LiAsF₆, LiSO₃CₓF₂ₓ₊₁, (LiB(C₂O₄)₂, LiBF₂(C₂O₄)), LiN(SO₂CₓF₂ₓ₊₁)₂ und LiC(SO₂CₓF₂ₓ₊₁)₃, wobei x ganzzahlige Werte von 0 bis 8 einnimmt, und deren Mischungen.

8. Lithium-Ionen-Batterie, welche Kathode, Anode, Separator und den Elektrolyten gemäß einem oder mehreren der vorangehenden Ansprüche umfasst.

9. Lithium-Ionen-Batterie nach Anspruch 8, welche eine Silicium enthaltende Anode umfasst.

## Claims

1. Electrolyte which comprises
100 parts by weight of aprotic solvent,
1 to 50 parts by weight of lithium-containing conducting salt,
4 to 50 parts by weight of vinylene carbonate, and cyclic phosphonamide of the general formula 1 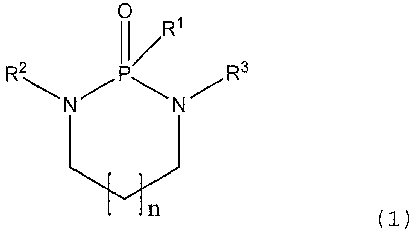 in which
R¹, R², R³ are each hydrocarbyl which is unsubstituted or substituted by fluoro, chloro or silyl groups and which has 1-20 carbon atoms, where two or three of the radicals R¹, R², R³ may be joined to one another, and
n has a value of 0, 1, 2, 3, 4 or 5.

2. Electrolyte according to Claim 1, wherein R² and R³ are selected from trimethylsilylalkyl radicals having 1-6 carbon atoms in the alkyl radical.

3. Electrolyte according to one or more of the preceding claims, wherein R¹ is an alkyl radical having 1 to 6 carbon atoms.

4. Electrolyte according to one or more of the preceding claims, wherein n has a value of 1.

5. Electrolyte according to one or more of the preceding claims, wherein the electrolyte comprises 0.1 to 10 parts by weight of cyclic phosphonamide of the general formula 1.

6. Electrolyte according to one or more of the preceding claims, wherein the aprotic solvent is selected from organic carbonates, cyclic and linear esters, cyclic and linear ethers, ketones, lactones, sulfolanes, dimethyl sulfoxide, formamide, dimethylformamide, 3-methyl-1,3-oxazolidine-2-one and mixtures of these solvents.

7. Electrolyte according to one or more of the preceding claims, wherein the lithium-containing conducting salt is selected from LiPF₆, LiBF₄, LiClO₄, LiAsF₆, LiSO₃CₓF₂ₓ₊₁, (LiB(C₂O₄)₂, LiBF₂(C₂O₄)), LiN(SO₂CₓF₂ₓ₊₁)₂ and LiC(SO₂CₓF₂ₓ₊₁)₃, where x adopts integral values from 0 to 8, and mixtures thereof.

8. Lithium-ion battery which comprises cathode, anode, separator and the electrolyte according to one or more of the preceding claims.

9. Lithium-ion battery according to Claim 8, which comprises a silicon-containing anode.

## Revendications

1. Électrolyte, qui contient :
100 parties en poids d'un solvant aprotique,
1 à 50 parties en poids d'un sel conducteur contenant du lithium,
4 à 50 parties en poids de carbonate de vinylène, et
un phosphonamide cyclique de formule générale 1 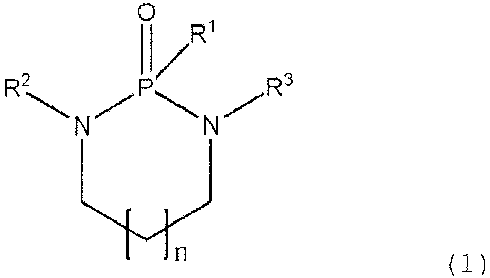 dans laquelle
R¹, R², R³ signifient chacun un radical hydrocarboné non substitué ou substitué avec fluor, chlore ou des groupes silyle, de 1 à 20 atomes de carbone, deux ou trois des radicaux R¹, R², R³ pouvant être reliés les uns avec les autres, et
n signifie la valeur 0, 1, 2, 3, 4 ou 5.

2. Électrolyte selon la revendication 1, dans lequel R² et R³ sont choisis parmi les radicaux triméthylsilylalkyle contenant 1 à 6 atomes de carbone dans le radical alkyle.

3. Électrolyte selon une ou plusieurs des revendications précédentes, dans lequel R¹ est un radical alkyle de 1 à 6 atomes de carbone.

4. Électrolyte selon une ou plusieurs des revendications précédentes, dans lequel n a la valeur 1.

5. Électrolyte selon une ou plusieurs des revendications précédentes, dans lequel l'électrolyte contient 0,1 à 10 parties en poids de phosphonamide cyclique de formule générale 1.

6. Électrolyte selon une ou plusieurs des revendications précédentes, dans lequel le solvant aprotique est choisi parmi les carbonates organiques, les esters cycliques et linéaires, les éthers cycliques et linéaires, les cétones, les lactones, les sulfolanes, le diméthylsulfoxyde, le formamide, le diméthylformamide, la 3-méthyl-1,3-oxazolidin-2-one et les mélanges de ces solvants.

7. Électrolyte selon une ou plusieurs des revendications précédentes, dans lequel le sel conducteur contenant du lithium est choisi parmi LiPF₆, LiBF₄, LiClO₄, LiAsF₆, LiSO₃CₓF₂ₓ₊₁, LiB(C₂O₄)₂, LiBF₂(C₂O₄), LiN(SO₂CₓF₂ₓ₊₁)₂ et LiC(SO₂CₓF₂ₓ₊₁)₃, x prenant des valeurs de nombre entier de 0 à 8, et leurs mélanges.

8. Batterie lithium-ion, qui comprend une cathode, une anode, un séparateur et l'électrolyte selon une ou plusieurs des revendications précédentes.

9. Batterie lithium-ion selon la revendication 8, qui comprend une anode contenant du silicium.
